Europäisches Patentamt

European Patent Office

Office européen des brevets

(19)

(11) EP 0 664 570 B1

(12) **FASCICULE DE BREVET EUROPEEN**

(45) Date de publication et mention
de la délivrance du brevet:
**08.04.1998 Bulletin 1998/15**

(51) Int Cl.⁶: **H01M 4/38**, H01M 4/36,
H01M 4/48, H01M 4/58

(21) Numéro de dépôt: **95100174.2**

(22) Date de dépôt: **09.01.1995**

(54) **Générateur électrochimique primaire ou secondaire à électrode nanoparticulaire**

Primärer oder sekundärer elektrochemischer Generator mit einer Nanometerpartikel enthaltenden Elektrode

Primary or secondary electrochemical generator having an electrode comprising nanometer size particles

(84) Etats contractants désignés:
**BE CH DE ES GB IT LI NL**

(30) Priorité: **21.01.1994 FR 9400648**

(43) Date de publication de la demande:
**26.07.1995 Bulletin 1995/30**

(73) Titulaire: **Renata AG**
**CH-4452 Itingen (CH)**

(72) Inventeurs:
• **Exnar, Ivan**
**CH-4452 Itingen (CH)**
• **Graetzel, Michael**
**CH-1025 St-Sulpice (CH)**
• **Randin, Jean-Paul**
**CH-2016 Cortaillod (CH)**

(74) Mandataire: **Thérond, Gérard Raymond et al**
**I C B**
**Ingénieurs Conseils en Brevets SA**
**Rue des Sors 7**
**2074 Marin (CH)**

(56) Documents cités:
**WO-A-92/18425**         **WO-A-93/08612**
**DE-A- 3 826 281**

Remarques:
Le dossier contient des informations techniques présentées postérieurement au dépôt de la demande et ne figurant pas dans le présent fascicule.

## Description

La présente invention a pour objet un générateur électrochimique primaire ou secondaire de grande capacité, et plus particulièrement un générateur dans lequel au moins une électrode est composée de particules nanocristallines d'un matériau électroactif, lesdites particules étant électriquement reliées entre elles.

L'invention concerne également une telle électrode ayant une grande capacité d'échange ionique et pouvant être utilisée comme cathode ou comme anode dans un générateur électrochimique primaire ou secondaire.

L'invention concerne également des procédés d'obtention d'une telle électrode à partir d'une solution colloïdale du matériau électroactif choisi.

Pour augmenter les performances des générateurs électrochimiques, en particulier au niveau de la densité d'énergie et de la puissance fournie, les recherches ont porté sur tous les éléments constitutifs du générateur, tels que le choix du couple de matériaux électroactifs constituant la cathode et l'anode, ou le choix de l'électrolyte associé, ainsi que celui du solvant utilisé. Les recherches ont également porté sur la constitution physique des éléments du générateur, notamment sur la conformation des électrodes de façon à augmenter les échanges ioniques.

Le brevet US 5 225 296 décrit par exemple un type d'électrode au carbone, pouvant être utilisée comme cathode ou comme anode, dans laquelle une porosité élevée est obtenue en liant ensemble des fibres de carbone et de la poudre de carbone, la taille des particules étant de l'ordre de la dizaine de microns.

Le brevet US 5 211 933 décrit un procédé dans lequel les particules de matériau actif pour une électrode sont obtenues en utilisant comme précurseur une solution colloïdale dudit matériau actif, soit directement par frittage de ladite solution colloïdale, soit par déshydratation thermique pour obtenir une poudre ultérieurement transformée en pastilles par compression. La taille des particules de matériau électroactif obtenues selon ce procédé est de l'ordre du micron.

Par rapport à ces caractéristiques connues de l'art antérieur, l'invention procure un générateur électrochimique dans lequel au moins une électrode a dans sa composition un matériau électroactif sous formes de particules de taille comprise entre 5 et 50 nm, lesdites particules étant électriquement reliées entre elles. Le matériau électroactif sous forme de nanoparticules est par exemple obtenu à partir d'une solution colloïdale utilisée, soit directement, soit après transformation en poudre par lyophilisation, ou par tout autre procédé approprié.

Lorsque la solution colloïdale est utilisée directement, un film est déposé sur un support conducteur et un bref frittage est effectué pour lier électriquement les particules entre elles. Les particules liées entre elles par frittage forment une nanostructure ayant un coefficient de rugosité élevé, compris entre 10 et 10'000, la valeur élevée de ce coefficient étant déterminante pour la capacité de stockage d'énergie. Cette rugosité augmente environ d'une valeur 100 par micron d'épaisseur. Ainsi, pour une couche de 5μ d'épaisseur le coefficient de rugosité est de 500, et ce coefficient est de 1'000 pour 10μ. Une épaisseur appropriée pour la capacité de stockage souhaitée se situe entre 5 et 100μ. Lorsque la solution colloïdale est transformée en poudre par lyophilisation, la poudre est incorporée à un mélange contenant de la poudre de carbone et un liant, puis comprimée en pastilles qui sont ensuite séchées sous vide sur un support conducteur.

Une telle électrode, ayant dans sa composition un matériau électroactif sous forme de nanoparticules procure une capacité de stockage d'énergie élevée et peut être utilisée dans des générateurs électrochimiques aussi bien primaires que secondaires. De même, une telle électrode peut être utilisée dans un générateur électrochimique ayant un électrolyte aqueux ou non aqueux, mais elle est utilisée de préférence avec un électrolyte aprotique. De préférence, l'électrolyte utilisé est un électrolyte contenant des ions de métaux alcalins, ou alcalino-terreux. Selon un mode de réalisation préféré, l'électrolyte contient des ions lithium apportés sous forme de l'un de ses sels tel que l'héxafluorophosphonate, l'héxafluoroarsénate, le bis (trifluorométhylsulfonyl) imide, le trifluorométhanesulfonate, le tris (trifluorméthylsulfonyl) méthide, le tétrafluoroborate, le perchlorate, le tétrachloroaluminate, ou le perfluorobutanesulfate. Selon ce mode de réalisation préféré le solvant de l'électrolyte est un solvant aprotique tel que la γ-butyrolactone, le tétrahydrofurane, le 1,2-diméthoxyéthane, le propylène carbonate, l'éthylène carbonate, le diméthylène carbonate, le diéthylène carbonate, le diéthyléther ou le dioxalane, ou un mélange de ces solvants. Le matériau utilisé pour au moins une électrode sous forme de nanoparticules peut être un matériau électroactif quelconque, mais selon un mode de réalisation préféré ce matériau sera choisi de façon à former un composé d'intercalation avec les métaux alcalins ou alcalino-terreux, en procurant ainsi un générateur électrochimique secondaire. Un matériau électroactif de ce type sera par exemple choisi parmi les oxydes, les chalcogénures ou les séléniures des métaux de transition, ou leurs formes lithiées ou partiellement lithiées, tels que $TiO_2$, $Nb_2O_5$, $HfO_2$, $MnO_2$, $TiS_2$, $WS_2$, $TiSe_2$, $Li_yNiO_2$, $Li_yCoO_2$, $Li_y(NiCo)O_2$ ou $Li_yMn_2O_4$. Selon un mode de réalisation préféré de l'invention, une électrode, pouvant être la cathode ou l'anode selon l'électroactivité du matériau employé pour l'autre électrode, est composée de nanoparticules de dioxyde de titane sous la forme anatase, ou sous forme d'un mélange d'anatase et de rutile, contenant plus de 50% d'anatase. En présence des ions lithium le dioxyde de titane sous forme nanocristalline est susceptible de former un composé d'intercalation $Li_xTiO_2$ dans lequel le coefficient d'intercalation x a une valeur élevée comprise entre 0,8 et 1. Pour une cellule dans laquelle x = 0,8 la densité théorique d'énergie est de 400 W.h.kg$^{-1}$ en admettant une tension moyenne de cellule de 1,5 volts. De tels résultats ne peuvent être atteints avec les technologies de l'art antérieur, telle que celle décrite par W.J Macklin et al. (Solid States Ionics 53-56 (1992) 694-700) dans laquelle la valeur du coefficient d'intercalation est d'environ 0,5.

Lorsqu'on utilise pour l'autre électrode un composé électroactif également capable d'intercaler des ions lithium, le générateur électrochimique selon l'invention est un générateur secondaire (rechargeable) du type "rocking chair", dont le principe a été décrit pour la première fois par M. Armand (Matérials for Advances Batteries, D.W. Murphy et al. Editors p. 145 Plenum press, New York - 1980).

Les caractéristiques et avantages de l'invention sont exposés plus en détails dans les exemples qui suivent, donnés à titre illustratif et non limitatif, en référence aux dessins annexés dans lesquels :

- la figure 1 représente une courbe voltamétrique obtenue avec une cellule dont une électrode est composée de TiO$_2$ (anatase) sous forme de nanoparticules;
- la figure 2 représente une vue de côté d'un générateur électrochimique selon l'invention avec une coupe partielle faisant apparaître l'agencement des couches internes;
- la figure 3 représente une courbe de décharge d'un premier mode de réalisation d'un générateur électrochimique selon l'invention;
- la figure 4 représente une courbe de charge et de décharge d'un deuxième mode de réalisation d'un générateur électrochimique selon l'invention.
- la figure 5 représente l'évolution de la capacité du deuxième mode de réalisation en fonction du nombre de cycles charge/décharge, comparativement à un générateur électrochimique ayant les mêmes matériaux électroactifs, mais dont aucun n'est sous forme de nanoparticules,
- la figure 6 représente la variation de rapport entre la capacité de charge et la capacité de décharge du deuxième mode de réalisation en fonction du nombre de cycles,
- la figure 7 représente l'évolution de la capacité d'une variante du deuxième mode de réalisation en fonction du nombre de cycles, et
- la figure 8 représente l'évolution du rapport entre la capacité de charge et la capacité de décharge d'une variante du deuxième mode de réalisation en fonction du nombre de cycles.

Les caractéristiques de l'électrode utilisée dans un générateur électrochimique selon l'invention ont été évaluées au moyen d'une cellule de mesure de laboratoire comportant une électrode d'environ 0,5 cm$^2$, composée d'un support ayant un revêtement conducteur sur lequel un film de TiO$_2$ (anatase) sous forme de nanoparticules est réalisé par frittage d'une solution colloïdale. L'électrolyte utilisé est composé d'une solution 1M de LiClO$_4$ dans du propylène carbonate. La cellule comporte enfin une contre-électrode en platine et une électrode de référence en Ag/AgCl. La solution colloïdale de TiO$_2$ est obtenue par hydrolyse de tétraisopropoxytitane, d'un autoclavage à 200°C pendant 12 heures, puis d'une évaporation de l'eau sous vide à 25°C jusqu'à obtention d'une viscosité convenable pour pouvoir déposer un film sur le support conducteur. Le film ainsi obtenu est fritté à 450°C pendant 30 minutes pour lier électriquement les nanoparticules entre elles. On a ainsi obtenu une structure d'environ 10μm d'épaisseur dont la taille des particules est d'environ 10 nm. Lorsque l'électrode qui vient d'être décrite est mise en décharge, le film nanostructuré de TiO$_2$ est capable d'intercaler de façon réversible et rapide les quantités de lithium nécessaires pour obtenir une grande capacité d'énergie, selon la réaction (1) :

$$TiO_2 + xLi + xe^- \rightarrow Li_x\,TiO_2 \qquad (1)$$

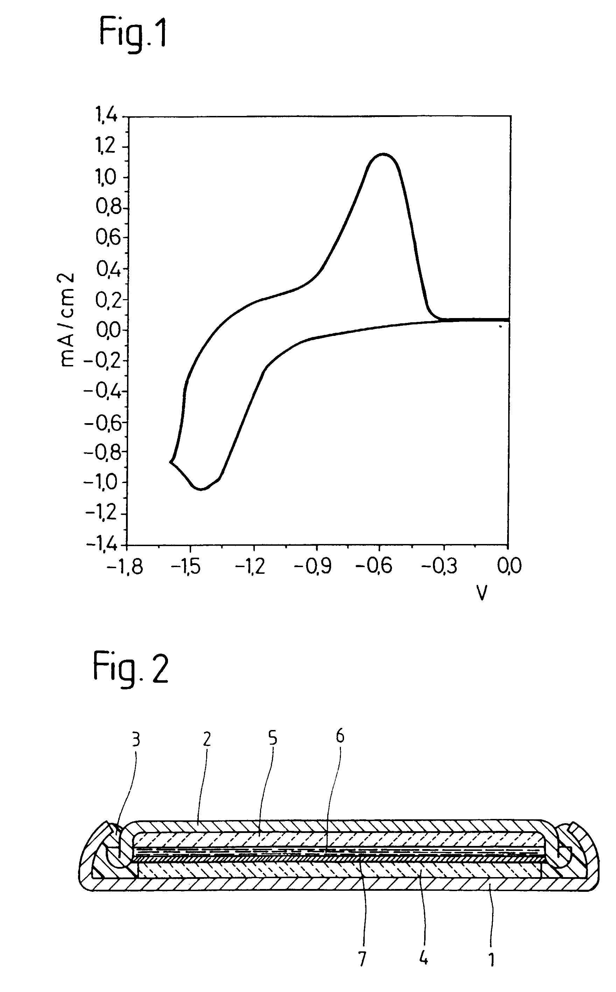

L'effet réversible et rapide apparaît clairement sur la courbe voltamétrique de la figure 1, effectuée avec une vitesse de balayage de 0,5mV.s$^{-1}$. Le pic cathodique est dû à l'intercalation des ions Li$^+$ dans la structure du TiO$_2$, tandis que le pic anodique provient de la désintercalation des ions Li$^+$ du film de TiO$_2$ dans l'électrolyte, ce qui correspond à la réaction inverse de la réaction(1). La charge stockée durant le cycle est respectivement de 0,9C.cm$^{-2}$ lorsqu'on augmente le potentiel et 1,0C.cm$^{-2}$ lorsqu'on le diminue. Compte tenu de la quantité totale de TiO$_2$ déposé sur la cathode, cela correspond à un coefficient d'intercalation x = 0,8.

En répétant la même expérience avec un film de TiO$_2$ déposé sur le support conducteur par le procédé en phase vapeur, et ayant donc une surface lisse sans structure nanoparticulaire, on mesure respectivement une charge cathodique de 1,00.10$^{-3}$ C.cm$^{-2}$ et une charge anodique de 1,33.10$^{-3}$ C cm$^{-2}$, c'est-à-dire une capacité de charge environ 1000 fois plus faible. Cet essai comparatif établit l'importance du caractère nanoparticulaire du matériau électroactif utilisé pour au moins une électrode.

Les exemples ci-après correspondent à la réalisation d'un générateur électrochimique secondaire selon l'invention, sous forme d'un accumulateur de type bouton, tel que représenté à la figure 2, étant entendu que d'autres types d'accumulateurs sont réalisables sans sortir du cadre de l'invention.

Un tel accumulateur comporte à sa partie inférieure un boîtier 1, et à sa partie supérieure un couvercle 2, maintenu en place et isolé électriquement du boîtier par un joint de scellement 3. Ces trois éléments définissent un espace intérieur comportant sur le fond du boîtier 1, servant de support conducteur, le matériau électroactif de la cathode 4, sur l'intérieur du couvercle 2, servant de support conducteur, le matériau électroactif de l'anode 5, les deux électrodes étant ioniquement reliées par un électrolyte éventuellement imprégné dans un matériau poreux non conducteur formant réservoir 6, un séparateur poreux 7 pouvant en outre être interposé entre le réservoir 6 et la cathode 4.

Ces exemples illustrent les deux modes de réalisation selon que les nanoparticules de matériau électroactif sont électriquement liées par frittage ou par compression.

### Exemple 1

Selon un premier mode de réalisation, un générateur électrochimique secondaire de type "rocking chair" comporte à titre de matériau électroactif à l'anode du $TiO_2$ (anatase) sous forme de nanoparticules électriquement reliées entre elles par frittage. A cet effet, on dépose sur le fond du couvercle 2, ayant une surface d'environ 1 cm², un film d'une solution colloïdale de $TiO_2$, obtenue par hydrolyse d'une solution de tétraisopropoxy titane et autoclavage à 200°C, ledit film étant ensuite fritté à 450°C. Le film nanostructuré ainsi réalisé a une épaisseur de 3,5μm, les particules de $TiO_2$ ayant une taille comprise entre 8 et 12 nm. Le matériau électroactif employé pour la cathode est du dioxyde de cobalt lithié $Li_yCoO_2$ et l'électrolyte est une solution 1M de $LiN(CF_3SO_2)_2$ dans un mélange d'éthylène carbonate et de 1,2-diméthoxyéthane (50/50 en poids).

Durant le cycle de charge les ions lithium sont intercalés dans le film nanostructuré de $TiO_2$ pour donner $Li_xTiO_2$.

Durant le cycle de décharge les ions lithium libérés par le film de $Li_xTiO_2$ sont intercalés dans le dioxyde de cobalt lithié, agissant comme cathode selon la réaction (2):

$$Li_yCoO_2 + xLi^+ + xe^- \rightarrow Li_{x+y}CoO_2$$

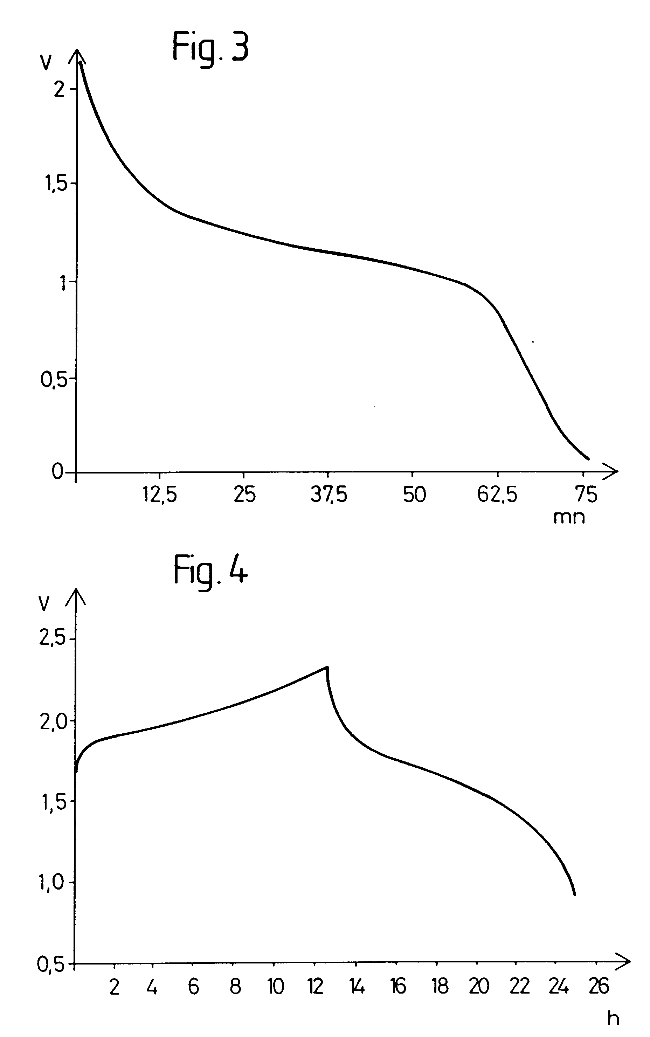

La figure 3 représente la courbe de décharge obtenue au cours du temps à travers une résistance de 10 kΩ. La courbe présente une forme qui est caractéristique des générateurs électrochimiques rechargeables. Soumis à des cycles de charge/décharge, la capacité s'est révélée constante à 10% après 240 cycles.

### Exemple 2

Selon un deuxième mode de réalisation un générateur électrochimique secondaire de type "rocking chair" comporte à titre de matériau électroactif à l'anode du $TiO_2$ (anatase) sous forme de nanoparticules électriquement reliées entre elles par compression avec une poudre de carbone et un liant. A cet effet, on prépare d'abord une poudre de nanoparticules de $TiO_2$ par lyophilisation d'une solution colloïdale obtenue comme indiqué dans l'exemple 1.

Une solution colloïdale aqueuse de $TiO_2$ à 5% en poids à pH1,0 est autoclavée pendant 12 heures à 200°C, puis concentrée sous vide à 30°C jusqu'à 10% en poids. A 200g de cette solution on ajoute sous agitation de l'isopropanol jusqu'à obtenir 600g de solution qu'on soumet à un traitement aux ultrasons pendant 20 minutes pour redisperser soigneusement les nanoparticules de $TiO_2$.

On procède ensuite à la lyophilisation au moyen d'un appareil comportant une pompe à palettes (2 étages, 4m³/h) et deux trappes à azote liquide en série, dont une, destinée à l'eau et à l'isopropanol, est reliée à un support en verre pour 4 ballons de 250ml, pourvus de rodages sphériques et de joints en Viton®. Dans chaque ballon, maintenu dans l'azote liquide, on introduit sous forme de spray 150g de la solution précédente. Après montage des ballons sur l'appareil à vide, la pompe est mise en route. La pression de départ est de 0,2mbar, et on refroidit jusqu'à une pression inférieure à 0,1mbar.

La lyophilisation est poursuivie pendant 72 heures jusqu'à obtention d'une poudre sèche de $TiO_2$, la pression finale étant d'environ 0,01 mbar.

Avec la poudre ainsi obtenue on réalise une pâte contenant 70 à 95%, de préférence 88% de $TiO_2$, 2 à 20%, de préférence 10% de graphite ayant une granulométrie d'environ 10μ et 1 à 10%, de préférence 2 % d'éthylène-propylènediène monomère en mouillant avec du cyclohéxane. La pâte ainsi obtenue est ensuite séchée à 90°C pendant 5 heures, puis pulverisée dans un broyeur à boulets jusqu'à obtention de grains d'environ 3μm. Une quantité de 109 mg de la poudre ainsi obtenue est comprimée entre 10 et 100 kN·cm⁻², de préférence à 40 kN cm⁻² pour former une pastille de 12,4 mm de diamètre et 0,40 mm d'épaisseur. La pastille ainsi obtenue est appliquée sur le collecteur de courant de l'anode et séchée sous vide à 160°C pendant 12 heures. Le matériau électroactif utilisé pour la cathode est $Li_y(NiCo)O_2$, sous forme d'une pastille réalisée selon un processus comparable à celui qui vient d'être décrit. A cet effet, on mélange intimement 70 à 90%, de préférence 80% de $Li_y(NiCo)O_2$, 1 à 40%, de préférence 10% de graphite et 10% de polytétrafluoro-éthylène, et on comprime entre 10 et 100 kN·cm⁻², de préférence à 70 kN cm⁻² pour obtenir une pastille de 12,4 mm de diamètre et 0,32 mm d'épaisseur qu'on applique ensuite sur le collecteur de courant de la cathode en séchant à 160°C. L'électrolyte utilisé est le même que celui de l'exemple 1, imprégné dans des fibres de polypropylène, un séparateur microporeux de polypropylène étant interposé entre la cathode et les fibres imprégnés d'électrolyte.

Le générateur électrochimique selon ce deuxième mode de réalisation a été soumis à des cycles de charge/décharge avec un courant de charge et de décharge constant de 0,5 mA, en augmentant la charge jusqu'à une tension maximum de 2,3V et en arrêtant la décharge à une tension minimum de 1V. Un exemple de courbe charge/décharge au bout du 15ème cycle est représenté à la figure 4.

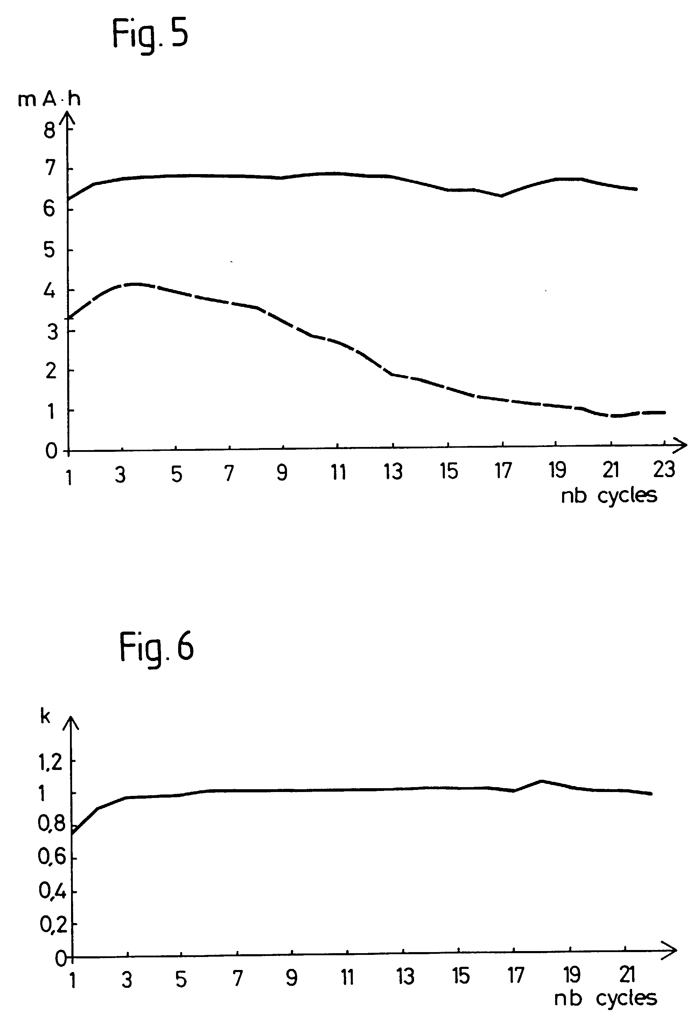

En suivant le même procédé que celui qui vient d'être décrit, mais en remplaçant le $TiO_2$ nanoparticulaire par un produit du commerce, par exemple disponible chez Fluka AG Buchs, on a réalisé un générateur électrochimique de référence. La figure 5 représente la variation jusqu'au 23ème cycle de la capacité de charge d'un générateur selon l'invention (trait plein), comparativement à celle du générateur de référence (trait pointillé). Cette courbe montre, d'une part que la capacité est plus élevée, d'autre part que cette capacité se maintient sensiblement constante au cours des cycles, alors que celle du générateur de référence est plus faible et décroît très nettement en fonction du nombre de cycles subis.

Le maintien des caractéristiques initiales du générateur électrochimique selon l'invention est également confirmé par la courbe de la figure 6 qui représente l'évolution du rapport k entre la capacité de charge et la capacité de décharge au cours des cycles, ce rapport k étant représentatif de la cyclabilité du générateur électrochimique.

Exemple 3

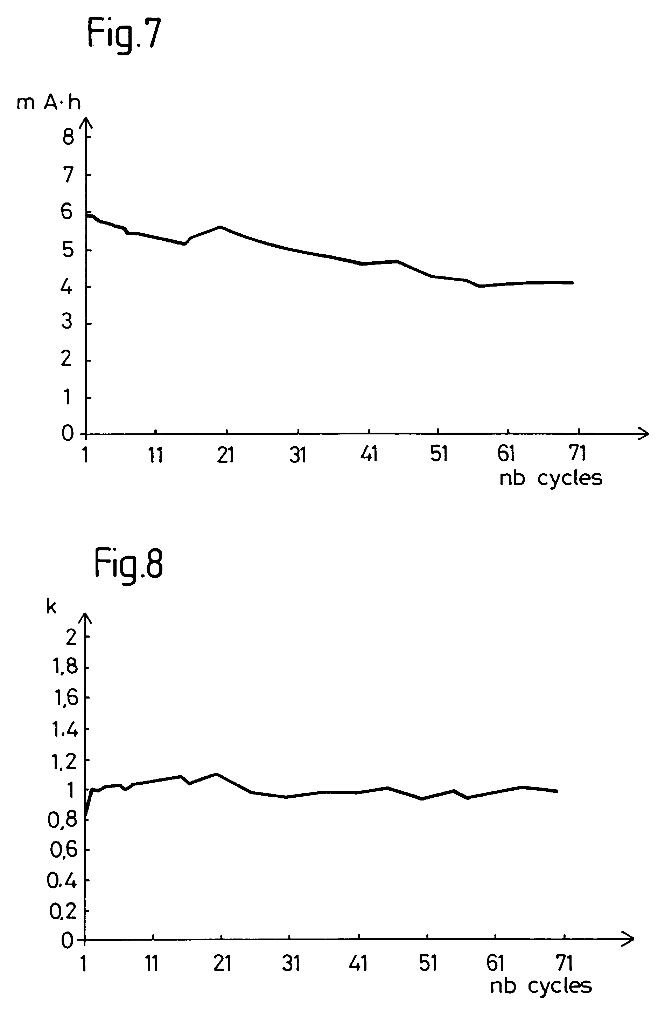

Selon une variante du deuxième mode de réalisation décrit à l'exemple 2, la pastille de l'anode est obtenue à partir d'un mélange initial composé de 88 % de $TiO_2$ nanoparticulaire, 10 % de graphite et 2 % de polytétrafluoroéthylène, par compresssion à 40 kN·cm$^{-2}$ de 70mg de mélange pulvérisé, ladite pastille étant ensuite placée entre deux treillis métalliques en acier inoxydable formant collecteur. La cathode et l'électrolyte sont les mêmes que ceux utilisés dans l'exemple 2. Le générateur électrochimique ainsi obtenu a été soumis à des cycles de charge/décharge dans les mêmes conditions que celles de l'exemple 2. Les résultats enregistrés sont représentés par les courbes des figures 7 et 8 qui correspondent respectivement à l'évolution de la capacité et à l'évolution du rapport k entre la capacité de charge et la capacité de décharge jusqu'au 71ème cycle. Ces courbes montrent que le générateur ainsi obtenu possède une grande capacité et une excellente cyclabilité.

En restant dans le cadre de l'invention, il est possible de construire d'autres générateurs électrochimiques primaires ou secondaires, par exemple, en choisissant un autre couple de matériaux électroactifs pour la cathode et l'anode, ou un autre électrolyte, dans la mesure où le matériau électroactif d'au moins une électrode est composé de nanoparticules dudit matériau.

**Revendications**

1. Générateur électrochimique primaire ou secondaire de grande capacité, comportant deux électrodes supportant des matériaux d'électroactivités différentes, lesdites électrodes étant reliées entre elles par un électrolyte, caractérisé en ce que le matériaux électroactif entrant dans la composition d'au moins une électrode est choisi parmi les oxydes de métaux de transition ou leurs formes lithiées ou partiellement lithiées, choisis parmi $TiO_2$, $Nb_2O_5$, $HfO_2$, $MnO_2$, $Li_yNiO_2$, $Li_yCoO_2$, $Li_y(NiCo)O_2$ ou $Li_yMn_2O_4$ sous forme de particules nanocristallines ayant une taille comprise entre 5 et 50 nm, lesdites particules étant électriquement reliées entre elles.

2. Générateur électrochimique selon la revendication 1, caractérisé en ce que les particules nanocristallines du matériau électroactif sont électriquement reliées entre elles par compression sous forme de pastilles d'un mélange composé desdites particules obtenues sous forme pulvérulente à partir d'une solution colloïdale dudit matériau électroactif, de poudre de carbone et d'un liant, puis séchage sous vide desdites pastilles déposées sur un support conducteur.

3. Générateur électrochimique selon la revendication 1, caractérisé en ce que l'électrolyte contient des métaux alcalins ou alcalino-terreux sous forme cationique.

4. Générateur électrochimique selon la revendication 3, caractérisé en ce que le métal alcalin est le lithium sous forme de l'un de ses sels choisi par l'héxafluorophosphate, l'héxafluoroarsénate, le bis (trifluorométhylsulfonyl) imide, le trifluorométhanesulfonate, le tris (trifluorométhylsulfonyl) méthide, le tétrafluoroborate, le perchlorate, le tétrachloroaluminate et le perfluorobutanesulfate.

5. Générateur électrochimique selon la revendication 1, caractérisé en ce que le solvant de l'électrolyte est un solvant aprotique choisi parmi la γ-butyrolactone, le tétrahydrofurane, le 1,2-diméthoxyéthane, le propylène carbonate, l'éthylène carbonate, le diméthylène carbonate, le diéthylène carbonate, le diéthyléther et le dioxalane, ou un mélange desdits solvants.

6. Générateur électrochimique selon la revendication 1, caractérisé en ce que le matériau électroactif d'une électrode, ou de chacune des deux électrodes est susceptible de former un composé d'intercalation avec les métaux alcalins ou alcalino-terreux.

7. Générateur électrochimique selon la revendication 2, caractérisé en ce que $TiO_2$ nanocristallin entre dans la composition de l'électrode négative et $Li_y$ $(NiCo)O_2$ dans la composition de l'électrode positive, l'électrolyte étant composé d'une solution 1M de trifluorométhane sulfonimide de lithium dans un mélange 50/50 en poids d'éthylène carbonate et de diméthoxyéthane.

8. Générateur électrochimique selon la revendication 7, caractérisé en ce que l'électrode négative est obtenue par compression sur un collecteur de courant d'un mélange contenant 70 à 95 % de $TiO_2$ nanocristallin, de préférence 88%, 2 à 20 % de graphite, de préférence 10%, et comme liant 1 à 10 % d'éthylène - propylène-diène monomère de préférence 2%, à une pression comprise entre 10 et 100 kN. $cm^{-2}$, de préférence 40 $kN.cm^{-2}$, la pastille ainsi obtenue étant ensuite séchée sous vide à environ 160°C pendant environ 12 heures.

9. Générateur électrochimique selon la revendication 8, caractérisé en ce que l'électrode positive est obtenue par compression sur un collecteur de courant d'un mélange contenant 70 à 90 % de $Li_y(NiCo)O_2$, de préférence 80 %, 1 à 40 % de poudre de graphite, de préférence 10 % et comme liant 1 à 20 % de polytétrafluoroéthylène, de préférence 2 %, à une pression comprise entre 10 et 100 $kN.cm^{-2}$, la pastille ainsi obtenue étant ensuite séchée sous vide à environ 160°C pendant environ 12 heures.

**Patentansprüche**

1. Primärer oder sekundärer elektrochemischer Generator großer Kapazität, umfassend zwei Elektroden, die Materialien unterschiedlicher Elektroaktivität tragen, wobei die Elektroden miteinander durch einen Elektrolyten verbunden sind, dadurch gekennzeichnet, daß das elektroaktive Material, das in die Zusammensetzung wenigstens einer Elektrode eintritt, ausgewählt ist unter den Oxiden von Übergangsmetallen oder deren lithiumhaltigen oder teilweise lithiumhaltigen Formen ausgewählt aus $TiO_2$, $Nb_2O_5$, $HfO_2$, $MnO_2$, $Li_yNiO_2$, $Li_yCoO_2$, $Li_y(NiCo)O_2$ oder $Li_yMn_2O_4$ in Form von nanometergroßen kristallinen Teilchen einer Größe zwischen 5 und 50 nm, wobei die Teilchen elektrisch miteinander verbunden sind.

2. Elektrochemischer Generator nach Anspruch 1, dadurch gekennzeichnet, daß die nanometergroßen kristallinen Teilchen des elektroaktiven Materials untereinander durch Kompression in Form von Pastillen einer Mischung verbunden sind, die aus diesen Teilchen, die in Pulverform aus einer kolloidalen Lösung des elektroaktiven Materials erhalten wurden, Kohlenstoffpulver und einem Bindemittel zusammengesetzt ist, wobei die Pastillen nach Trocknen unter Vakuum auf einem leitenden Träger aufgebracht sind.

3. Elektrochemischer Generator nach Anspruch 1, dadurch gekennzeichnet, daß der Elektrolyt Alkali- oder Erdalkalimetalle in kationischer Form enthält.

4. Elektrochemischer Generator nach Anspruch 3, dadurch gekennzeichnet, daß das Alkalimetall Lithium in Form eines seiner Salze ausgewählt aus dem Hexafluorphosphat, Hexafluorarsenat, Bis(trifluormethylsulfonyl)imid, Trifluormethansulfonat, Tris(trifluormethylsulfonyl) methid, Tetrafluorborat, Perchlorat, Tetrachloraluminat und Perfluorbutansulfat ist.

5. Elektrochemischer Generator nach Anspruch 1, dadurch gekennzeichnet, daß das Lösungsmittel ein aprotisches Lösungsmittel ausgewählt aus g-Butyrolacton, Tetrahydrofuran, 1,2-Dimethoxyethan, Propylencarbonat, Ethylencarbonat, Dimethylencarbonat, Diethylencarbonat, Diethyläther und Dioxalan oder eine Mischung hiervon ist.

6. Elektrochemischer Generator nach Anspruch 1, dadurch gekennzeichnet, daß das elektroaktive Material einer Elektrode oder jeder der beiden Elektroden geeignet ist, mit den Alkali- oder Erdalkalimetallen eine Einlagerungsverbindung zu bilden.

7. Elektrochemischer Generator nach Anspruch 2, dadurch gekennzeichnet, daß nanokristallines $TiO_2$ in die Zusammensetzung der negativen Elektrode und $Li_y(NiCo)O_2$ in die Zusammensetzung der positiven Elektrode eintritt, wobei der Elektrolyt aus einer 1-molaren Lösung von Lithiumtrifluormethansulfonimid in einer Mischung 50/50 bezogen auf das Gewicht von Ethylencarbonat und Dimethoxyethan besteht.

8. Elektrochemischer Generator nach Anspruch 7, dadurch gekennzeichnet, daß die negative Elektrode durch Kompression einer Mischung enthaltend 70 bis 95% nanokristallines $TiO_2$, vorzugsweise 88%, 2 bis 20% Graphit, vorzugsweise 10%, und als Bindemittel 1 bis 10% Ethylen-Propylen-Dien-Monomer, vorzugsweise 2%, bei einem Druck zwischen 10 und 100 $kNcm^{-2}$, vorzugsweise 40 $kNcm^{-2}$, auf einen Stromkollektor erhalten ist, wobei die so erhaltene Pastille anschließend unter Vakuum bei etwa 160°C während etwa 12h getrocknet ist.

9. Elektrochemischer Generator nach Anspruch 8, dadurch gekennzeichnet, daß die positive Elektrode durch Kompression einer Mischung enthaltend 70 bis 90% $Li_y(NiCo)O_2$, vorzugsweise 80%, 1 bis 40% pulverförmigen Graphit, vorzugsweise 10%, und als Bindemittel 1 bis 20% Polytetrafluorethylen, vorzugsweise 2%, bei einem Druck zwischen 10 und 100 $kNcm^{-2}$ auf einen Stromkollektor erhalten ist, wobei die so erhaltene Pastille anschließend unter Vakuum bei etwa 160°C während etwa 12h getrocknet ist.

## Claims

1. High capacity primary or secondary electrochemical generator having two electrodes supporting different electroactivated materials, said electrodes being connected together by an electrolyte, characterized in that the electroactive material used in the composition of at least one electrode is selected from amongst the oxides of transition metals or their lithiated or partially lithiated forms, such as $TiO_2$, $Nb_2O_5$, $HfO_2$, $MnO_2$, $Li_yNiO_2$, $Li_yCoO_2$, $Li_y(NiCo)O_2$ or $Li_yMn_2O_4$ in form of nanocrystalline particles having a size comprising between 5 and 50 nm, said particles being electrically connected together

2. Electrochemical generator according to claim 1, characterized in that the nanocrystalline particles of the electrically active material are electrically connected together by compressing in the form of pellets a mixture composed of said particles obtained in pulverized form from a colloidal solution of the said electrically active material, of carbon powder and of a bonding material, then drying said pellets deposited on a conducting support in a vacuum.

3. Electrochemical generator according to claim 1, characterized in that the electrolyte contains alkali or alkaline earth metals in cationic form.

4. Electrochemical generator according to claim 3, characterized in that the alkali metal is lithium in the form of one of its salts chosen from hexafluorophosphate, hexafluoroarsenate, bis (trifluoromethylsulfonyl) imide, trifluoromethanesulfonate, tris (trifluoromethylsulfonyl) methide, tetrafluroborate, perchlorate, tetrachloroaluminate and perfluorobutanesulfate.

5. Electrochemical generator according to claim 1, characterized in that the solvent of the electrolyte is an aprotic solvent selected from $\gamma$-butyrolactone, tetrahydrofuran, 1,2-dimethoxyethane, propylene carbonate, ethylene carbonate, dimethylene carbonate, diethylene carbonate, diethyl ether and dioxalane, or a mixture of these solvents.

6. Electrochemical generator according to claim 1, characterized in that the electrically active material of one electrode, or of each of the two electrodes, is capable of forming an intercalated compound with the alkali or alkaline earth metals.

7. Electrochemical generator according to claim 2, characterized in that nanocrystalline $TiO_2$ enters into the composition of the negative electrode and $Li_y(NiCo)O_2$ into the composition of the positive electrode, the electrolyte being composed of a 1M solution of trifluoromethane sulfonimide of lithium in a mixture 50/50 by weight of ethylene carbonate and dimethoxyethane.

8. Electrochemical generator according to claim 7, characterized in that the negative electrode is obtained by compression on a current collector of a mixture containing 70 to 95% of nanocrystalline $TiO_2$, preferably 88%, 2 to 20% graphite, preferably 10%, and as binding agent 1 to 10% ethylene propylene diene monomer, preferably 2%, at a pressure comprising between 10 and 100 kN·cm⁻², preferably 40 kN·cm⁻², the pellet thereby obtained then being dried in a vacuum at about 160°C for about 12 hours.

9. Electrochemical generator according to claim 8, characterized in that the positive electrode is obtained by compression on a current collector of a mixture containing 70 to 90% of $Li_y(NiCo)O_2$, preferably 80%, 1 to 40% of graphite powder, preferably 10% and as binding agent 1 to 20% of polytetrafluoroethylene, preferably 2%, at a pressure comprising between 10 and 100 kN·cm⁻², the pellet thereby obtained then being dried in a vacuum at about 160°C for about 12 hours.

## Fig.1

## Fig. 2

# Fig. 3

# Fig. 4

# Fig. 5

# Fig. 6

# Fig.7

# Fig.8